(19) Europäisches Patentamt
European Patent Office
Office européen des brevets

(11) Veröffentlichungsnummer : **0 394 761 B1**

(12) # EUROPÄISCHE PATENTSCHRIFT

(45) Veröffentlichungstag der Patentschrift : **08.12.93 Patentblatt 93/49**

(51) Int. Cl.$^5$ : **C08F 246/00,** C09D 157/04

(21) Anmeldenummer : **90106981.5**

(22) Anmeldetag : **11.04.90**

(54) **Hydroxyl-, Epoxid- und Säureanhydridgruppen enthaltende Copolymerisate, ein Verfahren zu ihrer Herstellung und ihre Verwendung als Bindemittel oder Bindemittelkomponente.**

(30) Priorität : **24.04.89 DE 3913407**

(43) Veröffentlichungstag der Anmeldung : **31.10.90 Patentblatt 90/44**

(45) Bekanntmachung des Hinweises auf die Patenterteilung : **08.12.93 Patentblatt 93/49**

(84) Benannte Vertragsstaaten : **AT BE CH DE ES FR GB IT LI NL SE**

(56) Entgegenhaltungen :
**FR-A- 2 264 824**
**US-A- 3 531 547**

(73) Patentinhaber : **BAYER AG**
**D-51368 Leverkusen (DE)**

(72) Erfinder : **Wamprecht, Christian, Dr.**
**Regatta Strasse 20**
**D-4040 Neuss 22 (DE)**
Erfinder : **Blum, Harald, Dr.**
**Auf dem Westkamp 1**
**D-4175 Wachtendonk (DE)**
Erfinder : **Pedain, Josef, Dr.**
**Haferkamp 6**
**D-5000 Köln 80 (DE)**

**EP 0 394 761 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Copolymerisate, die neben freien Hydroxyl-, freie Epoxid- und intramolekulare Carbonsäureanhydridgruppen in chemisch eingebauter Form enthalten, ein Verfahren zur Herstellung dieser Copolymerisate und ihre Verwendung als Bindemittel oder Bindemittelkomponente in Ein- bzw. Zweikomponenten-Beschichtungsmitteln oder -Dichtmassen.

Die Verwendung von Kombinationen aus organischen Verbindungen mit mindestens zwei intramolekularen Carbonsäureanhydridgruppen pro Molekül, insbesondere von bernsteinsäureanhydridhaltigen Copolymerisaten und Polyhydroxylverbindungen als Bindemittel für Lacke und Beschichtungsmittel ist bereits bekannt.

Die FR-A-2 392 092 beschreibt Beschichtungskompositionen, bestehend aus hydroxylfunktionellen Polymeren und einem Esteranhydrid mit mindestens zwei Anhydridgruppen pro Molekül, wobei das Esteranhydrid ein Oligomer von Trimellithsäureanhydrid ist. Nachteilig ist dabei die sehr schlechte Löslichkeit der Anhydridkomponente in lacküblichen Lösungsmitteln, sowie die Unverträglichkeit mit den hydroxylfunktionellen Polymeren.

Die EP-A-48 128 beschreibt Beschichtungskompositionen, bestehend aus einer Hydroxylkomponente mit mindestens zwei Hydroxylgruppen pro Molekül, einer Anhydridkomponente mit mindestens zwei Anhydridgruppen pro Molekül und gegebenenfalls einer als Katalysator wirkenden Aminkomponente. Dabei können die katalytisch wirkenden Aminogruppen auch schon in der Hydroxylkomponente enthalten sein. Die beschriebene Verwendung von monomeren Aminoalkoholen wie z.B. Triethanolamin als Vernetzungsreagentien wirkt sich dabei sehr nachteilig auf die Lösungsmittelfestigkeit der fertigen Lacke aus, wenn eine ausreichend lange Standzeit erreicht werden muß, da eine ausreichend lange Standzeit von mehreren Stunden nur auf Kosten einer geringen Vernetzungsdichte erzielt werden kann, wobei Lackfilme erhalten werden, die nicht lösungsmittelbeständig sind. Auch bei Verwendung von höhermolekularen Polyolen ist es kaum möglich, eine für die Praxis ausreichend lange Standzeit der Systeme zu erzielen, wobei zudem nachteilhaft ins Gewicht fällt, daß höhermolekulare Polyole oftmals mit den anhydridgruppenhaltigen Copolymerisaten unverträglich sind.

Sowohl bei Raumtemperatur härtende als auch Einbrennbindemittel auf Basis von Carboxylgruppen und Epoxidgruppen enthaltenden Bindemittelkomponenten sind bereits bekannt.

Die DE-OS 2 635 177 und DE-OS 2 728 459 beschreiben lösungsmittelarme Einbrennlacke bestehend aus a) einem carboxylgruppenhaltigen Acrylatharz, b) einem Epoxidharz mit mindestens zwei Epoxidgruppen pro Molekül und c) einem Lösungsmittelgemisch.

Die EP-A-123 793 und EP-A-156 210 beschreiben bei Raumtemperatur härtbare Harzkompositionen für Beschichtungen und Klebstoffe bestehend aus einer Komponente a) die Carboxyl- und tertiäre Aminogruppen enthält, und einer Komponente b) die Epoxidgruppen aufweist. Die Komponente a) wird dadurch erhalten, daß ein Copolymerisat, das Carbonsäure- und Carbonsäureanhydridgruppen enthält, mit einer Verbindung zur Reaktion gebracht wird, die eine tertiäre Aminogruppe und eine aktive Wasserstoffatome aufweisende Gruppe enthält, die mit den Anhydridgruppen reagieren kann. Die auf diese Weise aus den Anhydridgruppen erzeugten Carbonsäuregruppen stehen zusammen mit den direkt in das Polymer eingeführten Carbonsäuregruppen als gegenüber den Epoxidgruppen der Komponente b) reaktionsfähige Gruppierungen zur Verfügung. Solche Systeme haben jedoch den Nachteil, daß es zu Unverträglichkeiten zwischen den beiden Komponenten a) und b) kommen kann, was unzulängliche optische Eigenschaften der Lackfilme zur Folge hat. Ein weiterer Nachteil besteht in der Tatsache, daß man mit diesen Systemen erst nach 4 Tagen einigermaßen lösungsmittelbeständige Lackfilme erhält.

Die EP-A-134 691 beschreibt bei Raumtemperatur oder wenig erhöhter Temperatur härtbare Kompositionen bestehend aus a) einer Komponente mit mindestens zwei Hydroxylgruppen pro Molekül, b) einer Komponente mit mindestens zwei Carbonsäureanhydridgruppen pro Molekül und c) einer Komponente mit mindestens zwei Epoxidgruppen pro Molekül. Auch hierbei kann es zu Unverträglichkeiten der Komponenten a), b) und c) kommen, was schlechte optische Filmeigenschaften zur Folge hat.

Es war die der Erfindung zugrundeliegende Aufgabe, neue Bindemittelsysteme zur Verfügung zu stellen, bei deren Aushärtung die zwischen Carbonsäureanhydrid-, Hydroxyl- oder Epoxidgruppen im Sinne von Additionsreaktionen ablaufenden Vernetzungsreaktionen stattfinden, und die nicht mit den Nachteilen der Systeme des aufgezeigten Standes der Technik behaftet sind.

Diese Aufgabe konnte durch die Bereitstellung der nachstehend näher beschriebenen Copolymerisate gelöst werden, die gleichzeitig freie Hydroxyl-, freie Epoxid- und intramolekulare Carbonsäureanhydridgruppen in chemisch eingebauter Form enthalten. Derartige Copolymerisate sind bislang noch nicht bekannt geworden; ihr besonderer Vorteil ist in dem Umstand zu sehen, daß es bei der Formulierung der Beschichtungsmittel nicht zu Unverträglichkeiten unter verschiedenen Bindemittelkomponenten kommen kann und somit Lackfilme resultieren, die insbesondere extrem gute optische Eigenschaften aufweisen.

Ein weiterer Vorteil der erfindungsgemäßen Copolymerisate in dem Umstand zu sehen, daß es sich um

selbstvernetzende Systeme handelt, die nach einem "double-cure"-Mechenismus aushärten können.

Zunächst reagieren Anhydridgruppen mit Hydroxylgruppen, anschließend können die bei dieser Reaktion resultierenden Carboxylgruppen mit den Epoxidgruppen abreagieren. Dadurch wird die Anzahl der freien Carboxylgruppen im Überzug reduziert und es werden dadurch hohe Vernetzungsdichten erzielt. Hohe Anforderungen bezüglich Lösungsmittel- und Chemikalienbeständigkeit können erfüllt werden.

Gegenstand der Erfindung sind Copolymerisate mit einem als Gewichtsmittel bestimmten Molekulargewicht von 1500 bis 75 000 von olefinisch ungesättigten Verbindungen, dadurch gekennzeichnet, daß die Copolymerisate gleichzeitig

(i) 0,2 bis 6,0 Gew.-% an freien Hydroxylgruppen,
(ii) 1 bis 30 Gew.-% an Carbonsäureanhydridgruppen berechnet als $C_4H_2O_3$) und
(iii) 0,4 bis 13 Gew.-% an Epoxidgruppen (berechnet als $C_2H_2O$)

chemisch gebunden enthalten.

Gegenstand der Erfindung ist auch ein Verfahren zur Herstellung dieser Copolymerisate durch Copolymerisation eines Gemisches von olefinisch ungesättigten Verbindungen bei 60 bis 120°C in Gegenwart von, die Polymerisationsreaktion initiierenden Verbindungen, dadurch gekennzeichnet, daß man ein solches Gemisch an olefinisch ungesättigten Verbindungen verwendet, welches neben Hydroxyl-, Epoxid- und Säureanhydridgruppen-freien Monomeren

(i) olefinisch ungesättigten Alkohole,
(ii) olefinisch ungesättigte Säureanhydride
und
(iii) olefinisch ungesättigte Epoxide

in einer solchen Menge enthält, daß in dem Monomerengemisch 0,2 bis 6,0 Gew.-% Hydroxylgruppen, 1 bis 30 Gew.-% Carbonsäureanhydridgruppen (berechnet als $C_4H_2O_3$) und 0,4 bis 13 Gew.-% Epoxidgruppen (berechnet als $C_2H_2O$) vorliegen.

Gegenstand der Erfindung ist schließlich auch die Verwendung dieser Copolymerisate als Bindemittel oder Bindemittelkomponente in Ein- oder Zweikomponenten-Beschichtungsmitteln oder -Dichtmassen, welche als weitere Bindemittelkomponente organische Aminverbindungen als Katalysatoren enthalten können.

Die erfindungsgemäßen Copolymerisate weisen ein, nach der Methode der Gelpermeationschromatographie bestimmbares, Molekulargewicht (Gewichtsmittel) von 1500 bis 75 000, vorzugsweise 2000 bis 60 000 und besonders bevorzugt 3000 bis 40 000 auf. In den Copolymerisaten liegen neben chemisch eingebauten, freien Hydroxylgruppen in einer Menge von 0,2 bis 6,0 Gew.-% vorzugsweise 0,4 bis 4,0 Gew.-% sowohl chemisch eingebaute intramolekulare, cyclische Carbonsäureanhydridgruppen der Formel

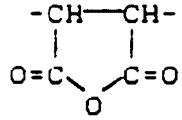

in einer Menge von 1 bis 30 Gew.-%, vorzugsweise 2 bis 25 Gew.-% (berechnet als $C_4H_2O_3$), als auch chemisch eingebaute Epoxidgruppen der Formel

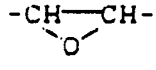

in einer Menge von 0,4 bis 13 Gew.-%, vorzugsweise 0,5 bis 10 Gew.-% (berechnet als $C_2H_2O$), vor.

Es handelt sich bei den Copolymerisaten um solche auf Basis von vorzugsweise einfach olefinisch ungesättigten Monomeren.

Zur Herstellung der Copolymerisate, d.h. als Ausgangsmaterialien beim erfindungsgemäßen Verfahren kommen vier Gruppen von olefinisch ungesättigten Monomeren zum Einsatz und zwar a) Hydroxylgruppen enthaltende, olefinisch ungesättigte Monomere, b) intramolekulare Carbonsäureanhydridgruppen enthaltende, olefinisch ungesättigte Monomere, c) Epoxidgruppen enthaltende, olefinisch ungesättigte Monomere und d) olefinisch ungesättigte Monomere, die keine derartigen Reaktivgruppen aufweisen und auch gegenüber

derartigen Reaktivgruppen inert sind.

Die Monomeren a) werden im allgemeinen in einer Menge von 1 bis 50, vorzugsweise 2 bis 40 Gew.-Teilen, die Monomeren b) in einer Menge von 1 bis 30, vorzugsweise 2 bis 25 Gew.-Teilen, die Monomeren c) in einer Menge von 1 bis 40, vorzugsweise 2 bis 35 Gew-Teilen und die Monomeren d) im allgemeinen in einer Menge von 1 bis 50, vorzugsweise 2 bis 40 Gew.-Teilen eingesetzt, wobei die Summe der Gew.-Teile der Monomeren a) bis d) 100 ergibt. Dabei ist weiterhin zu berücksichtigen, daß die Anteile der einzelnen Monomeren in dem der Copolymerisation zuzuführenden Gemisch so bemessen werden, daß in den Copolymerisaten die obengenannten Mengen an chemisch eingebauten Hydroxyl-, Carbonsäureanhydrid- und Epoxidgruppen vorliegen. Der Gehalt der Copolymerisate an diesen Gruppierungen entspricht dem Gehalt des Monomergemischs an den gleichen Gruppen, da davon ausgegangen werden kann, daß die Copolymerisate bezüglich ihrer chemischen Zusammensetzung der chemischen Zusammensetzung des Monomerengemischs entsprechen.

Im übrigen werden Art und Mengenverhältnisse der Monomeren vorzugsweise so bemessen, daß in den resultierenden Copolymerisaten für jede Carbonsäureanhydridgruppe 0,2 bis 8, vorzugsweise 0,4 bis 4 Hydroxylgruppen und 0,2 bis 8, vorzugsweise 0,4 bis 4 Epoxidgruppen vorliegen.

Die Herstellbarkeit solcher Copolymerisate mit Hydroxyl-, Carbonsäureanhydrid- und Epoxidgruppen war keineswegs vorhersehbar, weil Carbonsäureanhydridgruppen bei höheren Temperaturen gegenüber Hydroxylgruppen reaktionsfähig sind und die bei dieser Reaktion entstehenden Carbonsäuregruppen mit Epoxidgruppen in einer Additionsreaktion bei Wärmeeinwirkung abreagieren können.

Trotzdem lassen sich durch Anwendung des erfindungsgemäßen Verfahrens diese neuen Copolymerisate in organischen Lösungsmitteln durch radikalische Copolymerisation herstellen.

Bei den Monomeren a) handelt es sich um einfach olefinisch ungesättigte Alkohole, die vorzugsweise ein Molekulargewicht von 58 bis 500 und vorzugsweise aliphatisch gebundene Hydroxylgruppen aufweisen. Gut geeignet sind beispielsweise übliche Hydroxyalkylester der Acryl- und Methacrylsäure wie z.B. Hydroxyethyl-(meth)acrylat, Hydroxypropyl(meth)acrylat, 4-Hydroxybutyl(meth)acrylat; Hydroxyalkylvinylether wie z.B. Hydroxyethylvinylether oder Hydroxybutylvinylether; Allylalkohol; Hydroxyderivate des (Meth)acrylamids wie z.B. N-(3-Hydroxy-2,2-dimethylpropyl)-(meth)acrylamid; Umsetzungsprodukte von Glycidyl(meth)acrylat mit Monocarbonsäuren; Umsetzungsprodukte von (Meth)acrylsäure mit Monoepoxidverbindungen; sowie Umsetzungsprodukte der zuvor genannten OH-funktionellen olefinisch ungesättigten Verbindungen mit ε-Caprolacton oder Butyrolacton.

Typische Beispiele für Monomere b) sind z.B. Itaconsäureanhydrid oder Maleinsäureanhydrid, wobei Maleinsäureanhydrid bevorzugt ist.

Gut geeignete Monomere c) sind z.B. Glycidylacrylat oder Glycidylmethacrylat.

Die Monomeren d) weisen im allgemeinen ein Molekulargewicht von 86 bis 400 auf. Es handelt sich um die üblichen Hydroxylgruppen-, Säureanhydridgruppen-, und Epoxidgruppen-freien, vorzugsweise einfach olefinisch ungesättigten Monomeren, wie sie auch bereits bei dem Verfahren des obengenannten Standes der Technik als Monomere eingesetzt worden sind. Typische Beispiele sind Ester der Acryl- und Methacrylsäure wie beispielsweise Methylacrylat, Ethylacrylat, n-Butylacrylat, Isobutylacrylat, tert.-Butylacrylat, 2-Ethylhexylacrylat, Cyclohexylmethacrylat, Methylmethacrylat, n-Butylmethacrylat, Isobutylmethacrylat oder 2-Ethylhexylmethacrylat; Vinylaromaten wie beispielsweise Styrol, Vinyltoluol, α-Methylstyrol, α-Ethylstyrol, kernsubstituierte, gegebenenfalls Isomerengemische darstellende Diethylstyrole, Isopropylstyrole, Butylstyrole und Methoxystyrole; Vinylether wie beispielsweise Ethylvinylether, N-Propylvinylether, Isopropylvinylether, n-Butylvinylether und Isobutylvinylether; Vinylester wie beispielsweise Vinylacetat, Vinylpropionat und Vinylbutyrat.

Bei der Durchführung der Copolymerisation können selbstverständlich jeweils beliebige Gemische der beispielhaft genannten Monomeren a) bis d) verwendet werden.

Die Herstellung der Copolymerisate, d.h. das erfindungsgemäße Verfahren kann durch Copolymerisation der beispielhaft genannten Monomeren a) bis d) nach üblichen radikalischen Polymerisationsverfahren erfolgen, wie beispielsweise Masse- oder Lösungspolymerisation.

Dabei werden die Monomeren bei Temperaturen von 60 bis 120°C, vorzugsweise 80 bis 115°C in Gegenwart von Radikalbildnern und gegebenenfalls Molekulargewichtsreglern copolymerisiert.

Das erfindungsgemäße Verfahren wird vorzugsweise in inerten Lösungsmitteln durchgeführt. Geeignete Lösungsmittel sind beispielsweise Aromaten wie Benzol, Toluol, Xylol; Ester wie Ethylacetat, Butylacetat, Hexylacetat, Heptylacetat, Methylglykolacetat, Ethylglykolacetat, Methoxypropylacetat; Ether wie Tetrahydrofuran, Dioxan, Diethylenglykoldimethylether; Ketone wie Aceton, Methylethylketon, Methylisobutylketon, Methyl-n-amylketon, Methyl-isoamylketon.

Das erfindungsgemäße Verfahren kann kontinuierlich oder diskontinuierlich erfolgen. Üblicherweise wird in einem Polymerisationsreaktor gleichmäßig und kontinuierlich die Monomermischung und der Initiator eindosiert und gleichzeitig die entsprechende Menge Polymerisat kontinuierlich abgeführt. Vorzugsweise können

so chemisch nahezu einheitliche Copolymere hergestellt werden. Chemisch nahezu einheitliche Copolymere können auch hergestellt werden, indem man die Reaktionsmischung mit konstanter Geschwindigkeit in einen Rührkessel einlaufen läßt, ohne das Polymerisat abzuführen.

Man kann auch einen Teil der Monomeren beispielsweise in Lösungsmitteln der genannten Art vorlegen und die restlichen Monomeren und Hilfsmittel getrennt oder gemeinsam in diese Vorlage bei der Reaktionstemperatur eintragen.

Im allgemeinen erfolgt die Polymerisation unter Atmosphärendruck, kann jedoch auch bei erhöhten Drücken bis zu 20 bar durchgeführt werden. Die Initiatoren werden im allgemeinen in Mengen von 0,05 bis 15 Gew.-%, vorzugsweise 0,1 bis 10 Gew.-%, bezogen auf die Gesamtmenge der Monomeren, eingesetzt.

Geeignete Initiatoren sind übliche Radikalstarter wie z.B. aliphatische Azoverbindungen wie Azodiisobuttersäurenitril, Azo-bis-2-methylvaleronitril, 1,1′-Azo-bis-1-cyclohexannitril und 2,2′-Azo-bis-isobuttersäurealkylester; symmetrische Diacylperoxide, z.B. Acetyl-, Propionyl- oder Butyrylperoxid, mit Brom-, Nitro-, Methyl- oder Methoxygruppen substituierte Benzoylperoxide, Laurylperoxide; symmetrische Peroxidicarbonate, z.B. Diethyl-, Diisopropyl-, Dicyclohexyl sowie Benzoylperoxidicarbonat, tert.-Butylperoxy-2-ethylhexanoat, tert.-Butylperbenzoat oder tert.-Butylphenylperacetat sowie Peroxycarbonate wie z.B. tert.-Butyl-N-(phenylperoxy)-carbonat oder tert.-Butyl-N-(2-, 3- oder 4-chlorphenylperoxy)-carbonat; Hydroperoxide wie beispielsweise tert.-Butylhydroperoxid, Cumolhydroperoxid; Dialkylperoxide wie Di-cumylperoxid; tert.-Butylcumylperoxid oder Di-tert.-butylperoxid.

Zur Regelung des Molekulargewichts der Copolymerisate können übliche Regler bei der Herstellung eingesetzt werden. Beispielhaft genannt seien tert.-Dodecylmercaptan, n-Dodecylmercaptan oder Diisopropylxanthogendisulfid. Die Regler können in Mengen von bis zu 10 Gew.-%, vorzugsweise 0,5 bis 5 Gew.-%, bezogen auf die Gesamtmenge der Monomeren, zugegeben werden.

Die bei der Copolymerisationreaktion anfallenden Lösungen der Copolymerisate können dann ohne weitere Aufarbeitung der erfindungsgemäßen Verwendung zugeführt werden Selbstverständlich ist es jedoch auch möglich, die Copolymerisate destillativ von gegebenenfalls noch vorliegenden Restmengen an nicht umgesetzten Monomeren und Lösungsmittel zu befreien und die als Destillationsrückstand vorliegenden Copolymerisate der erfindungsgemäßen Verwendung zuzuführen.

Die erfindungsgemäßen Copolymerisate stellen wertvolle Bindemittel oder Bindemittelkomponenten für Ein- oder Zweikomponenten-Beschichtungsmittel oder -Dichtmassen dar. Einerseits handelt es sich bei den Copolymerisaten wegen der Reaktionsfähigkeit von cyclische Carbonsäureanhydridgruppen gegenüber Hydroxylgruppen in der Hitze und der Reaktionsfreudigkeit der bei dieser Reaktion entstehenden Carbonsäuregruppen gegenüber Epoxidgruppen um Hitze-vernetzbare Einkomponenten-Bindemittel, was bedeuten soll, daß Beschichtungsmitteln und Dichtmassen, die in der Hitze ausgehärtet werden, neben den erfindungsgemäßen Copolymerisaten keine weitere Bindemittelkomponente einverleibt werden muß. Andererseits sind die erfindungsgemäßen Copolymerisate bei Raumtemperatur, auch in üblichen Lacklösungsmitteln gelöst, weitgehend lagerstabil und können durch Zugabe einer weiteren "Bindemittelkomponente", nämlich einem geeigneten Katalysator, in bei Raumtemperatur aushärtende Systeme überführt werden. In einem solchen Falle ist es gerechtfertigt, von "Bindemittelkomponenten für Zweikomponenten-Beschichtungsmittel oder -Dichtmassen" zu sprechen.

Bei dieser letztgenannten Variante der Aushärtung der erfindungsgemäßen Copolymerisate ist es wesentlich, durch Zugabe einer Katalysatorkomponente die Reaktionsfähigkeit der Säureanhydridgruppen gegenüber den Hydroxylgruppen so weit zu steigern, daß bereits bei niedrigen Temperaturen, wie z.B. Raumtemperatur, eine Vernetzungsreaktion einsetzte. Solche Katalysatoren sind vorzugsweise tert.-Aminogruppen enthaltende Verbindungen. Es kann sich dabei um Verbindungen handeln, die entweder gegenüber Säureanhydridgruppen inert sind oder aber zusätzlich zur tert.-Aminogruppe eine gegenüber Säureanhydridgruppen reaktionsfähige Gruppe (Hydroxylgruppe, primäre oder sekundäre Aminogruppe) aufweisen. Im zweiten Fall wird die Katalysatorkomponente in die Bindemittelkomponente chemisch eingebaut und zwar durch Reaktion ihrer reaktionsfähigen Gruppe mit Säureanhydrid- oder Epoxidgruppen (im Falle von primären oder sekundären Aminogruppen) unter Ausbildung von Halbester-, Halbamid- bzw. sekundären und tertiären Aminogruppierungen, verbunden mit der Ausbildung einer zusätzlichen Hydroxylgruppe (aus der Epoxidgruppe).

Als Katalysatoren geeignete Verbindungen sind beispielsweise tert. Amine des Molekulargewichtsbereichs 73 bis 300 wie Ethyldimethylamin, Diethylmethylamin, Triethylamin, Ethyldiisopropylamin, Tributylamin, 1-Methylpyrrolidin, 1-Methylpiperidin, 1,4-Dimethylpiperazin, 1,4-Diazabicyclo(2,2,2)octan oder 1,8-Diazabicyclo (5,4,0)undec-7-en, N,N-Dimethylethanolamin, N,N-Diethylpropanolamin, N,N-Dibutylethanolamin, 1-Amino-3-(dimethylamino)propan oder 1-Amino-2-(diethylamino)-ethan. Es können auch beliebige Gemische der beispielhaft genannten tert. Amine eingesetzt werden.

Weiterhin ist es auch möglich, organische Verbindungen mit mindestens einer tert.-Aminogruppen einzusetzen, die ein Molekulargewicht von mehr als 300 besitzen. Solche Substanzen können z.B. Umsetzungsprodukte von olefinisch ungesättigten (Meth)acrylatgruppen aufweisenden Verbindungen mit sekundären Aminen sein, z.B. das Umsetzungsprodukt aus 1 Mol Trimethylolpropantriacrylat und 3 Mol Di-n-butylamin.

Aber auch Umsetzungsprodukte von Polyisocyanaten mit N,N-Dialkylalkanolaminen, wie z.B. das Umsetzungsprodukt aus 1 Mol biuretisiertem Polyisocyanat auf Basis von Hexamethylendiisocyanat und 3 Mol N,N-Dimethylethanolamin sind geeignet.

Verbindungen, die neben einer tertiären Aminogruppe noch Hydroxylgruppen aufweisen, können beispielsweise auch hergestellt werden durch Reaktion von Verbindungen, die Epoxidgruppen enthalten, mit sekundären Aminen; z.B. das Umsetzungsprodukt aus Ethylhexylglycidylether und Di-n-butylamin oder das Umsetzungsprodukt aus 1,2,7,8-Diepoxyoctan und zwei Molekülen Di-n-hexylamin.

Bei der Herstellung von bei Raumtemperatur aushärtenden Zweikomponenten-Systemen werden die Katalysatoren im allgemeinen in solchen Mengen eingesetzt, die einen Gehalt des Gemischs aus Copolymerisat und Katalysator an tert. Stickstoff (berechnet als N, Atomgewicht = 14) von 0,001 bis 1,0, vorzugsweise 0,01 bis 0,5 Gew.-%, entsprechen.

Es ist selbstverständlich auch möglich, die Aushärtgeschwindigkeit eines bei Raumtemperatur spontan aushärtenden "Zweikomponenten-Systems" durch Erwärmen (60 bis 80°C) zu beschleunigen.

Beschichtungsmittel und Dichtmassen, die erfindungsgemäße Copolymerisate als Bindemittel bzw. wesentliche Bindemittelkomponente (neben dem Katalysator als zweite Bindemittelkomponente) enthalten, können auch noch weitere Hilfs- und Zusatzmittel wie beispielsweise Lösungsbzw Verdünnungsmittel, Verlaufhilfsmittel, Antioxidantien, UV-Absorber oder Pigmente enthalten.

Die Herstellung der gebrauchsfertigen Beschichtungsmittel bzw. Dichtmassen erfolgt durch Abmischung der Einzelkomponenten, wobei im Falle der Mitverwendung von Lösungs- bzw. Verdünnungsmitteln insbesondere auch eine Ausführungsform denkbar ist, derzufolge diese Hilfsmittel schon während der Herstellung der Copolymerisate zugegen sein können, wie dies bereits oben im Zusammenhang mit der Herstellung der Copolymerisate beschrieben worden ist. Grundsätzlich handelt es sich bei den Lösungs- bzw. Verdünnungsmitteln, die in den Beschichtungsmitteln oder Dichtmassen vorliegen können, um solche der bereits oben beispielhaft genannten Art. Sie werden im allgemeinen in solchen Mengen mitverwendet, die zur Einstellung von geeigneten Verarbeitungsviskositäten der erfindungsgemäßen Bindemittel erforderlich sind. Der Festgehalt, der der erfindungsgemäßen Verwendung zuzuführenden erfindungsgemäßen Kompositionen liegt im allgemeinen zwischen 20 und 80 Gew.-%. Durch Verwendung geeigneter niedermolekularer Copolymerisate ist es jedoch prinzipiell auch möglich, den Lösungs- bzw. Verdünnungsmittelgehalt noch weiter zu reduzieren.

Das Verhältnis von Säureanhydridgruppen zu Hydroxylgruppen und Epoxidgruppen in den gebrauchsfertigen Beschichtungsmitteln und Dichtmassen entspricht den oben gemachten Ausführungen bezüglich der diesbezüglichen Zusammensetzung der Copolymerisate. Falls in Zweikomponenten-Formulierungen Katalysatoren eingesetzt werden, die gegenüber Säureanhydridgruppen bzw. Epoxidgruppen reaktionsfähige Gruppen aufweisen und dadurch einen zusätzlichen Verbrauch an derartigen Gruppen bewirken, kann man dies gewünschtenfalls durch eine Erhöhung der Konzentration der Säureanhydrid- bzw. Epoxidgruppen berücksichtigen.

Die erfindungsgemäßen, vorzugsweise in inerten Lösungs- bzw. Verdünnungsmittel gelösten Beschichtungsmittel und Dichtmassen sind als Einkomponenten-Systeme im allgemeinen mehrere Monate lagerstabil bzw. weisen als Zweikomponenten-Formulierung eine Topfzeit von mehreren Stunden auf. Einkomponenten-Systeme härten durch Selbstvernetzung bei Temperaturen von ca. 140 bis 200°C und Zweikomponenten-Systeme härten bereits bei Raumtemperatur zu Beschichtungen mit hochwertigen mechanischen und optischen Filmeigenschaften aus.

Die erfindungsgemäßen Copolymerisate können direkt ohne weitere Zusätze zur Herstellung von Klarsichtüberzügen verwendet werden. In der Regel werden jedoch die in der Lackindustrie üblichen Hilfs- und Zusatzmittel der bereits oben beispielhaft genannten Art mitverwendet. Die erfindungsgemäßen Beschichtungsmittel oder Dichtmassen können nach bekannten Methoden wie Spritzen, Streichen, Tauchen, Fluten, Gießen, Walzen auf beliebige, gegebenenfalls bereits vorbehandelteUntergründe wie z.B. Metall, Holz, Glas, Keramik, Stein, Beton, Kunststoffe, Textilien, Leder, Pappe und Papier aufgetragen werden.

In den nachfolgenden Beispielen beziehen sich alle Angaben in Prozenten und Teilen, falls nicht anders vermerkt, auf das Gewicht.

Beispiele

I Allgemeine Herstellvorscchrift für die Hydroxyl-, Anhydrid- und Epoxidgruppen enthaltenden Copolymerisate $A_1$ bis $A_7$

In einem 3-l-Reaktionsgefäß mit Rühr-, Kühl- und Heizvorrichtungen wird Teil I vorgelegt und auf Reaktionstemperatur aufgeheizt. Dann werden parallel Teil II (Zugabe über einen Zeitraum von insgesamt 2 Stunden) und Teil III (Zugabe über einen Zeitraum von insgesamt 2,5 Stunden) zudosiert. Anschließend wird 2 Stunden bei der Reaktionstemperatur nachgerührt.

Die Reaktionstemperaturen und die Zusammensetzungen der Teile I bis III sind in Tabelle I, zusammen mit den Kenndaten der erhaltenen Copolymerisate aufgeführt.

Tabelle I (Mengenangaben in g)

| Copolymerisate | $A_1$ | $A_2$ | $A_3$ | $A_4$ | $A_5$ | $A_6$ | $A_7$ |
|---|---|---|---|---|---|---|---|
| Teil I | | | | | | | |
| Butylacetat | 800 | 680 | 680 | 680 | | | |
| Methoxypropylacetat | | | | | 800 | 800 | 800 |
| Teil II | | | | | | | |
| Butylacrylat | 222 | | | | 162 | | |
| Styrol | 215 | 352 | 352 | 250 | 268 | 248 | 248 |
| Methylmethacrylat | 215 | | | 126 | 194 | | 322 |
| 2-Ethylhexylacrylat | | | 414 | | | | |
| 2-Ethylhexylmethacrylat | | 470 | | | | | |
| Butylmethacrylat | | | | 384 | | 322 | |
| Hydroxypropylmethacrylat | 160 | 174 | 206 | 186 | | | |
| Hydroxyethylmethacrylat | | | | | 108 | 182 | 182 |
| Glycidylmethacrylat | 156 | 58 | 58 | 100 | 194 | 194 | 194 |
| Maleinsäureanhydrid | 108 | 118 | 140 | 126 | 150 | 130 | 130 |
| Teil III | | | | | | | |
| tert.-Butylperoxy-2-ethylhexanoat (70 %ig) | 64 | 70 | 70 | 70 | 64 | 64 | 64 |
| Butylacetat | 60 | 78 | 80 | 78 | | | |
| Methoxypropylacetat | | | | | 60 | 60 | 60 |
| Polymerisationstemperatur (°C) | 100 | 100 | 100 | 100 | 105 | 105 | 105 |
| Festgehalt (%) | 56,0 | 59,8 | 59,1 | 60,4 | 55,8 | 56,0 | 55,1 |
| Viskosität (mPa.s) | 13448 | 9162 | 13415 | 69242 | 25194 | 27399 | 48878 |
| Molverhältnis Anhydrid-/Hydroxyl-/ Epoxidgruppen ca. | 1:1:1 | 3:3:1 | 7:7:2 | 1,9:1,9:1 | 1,9:1,7:1 | 1:1:1 | 1:1:1 |

II Herstellung der erfindungsgemäßen Beschichtungsmittel

a) Filmhärtung unter Einbrennbedingungen

Die Copolymerisate $A_1$ bis $A_7$ werden gegebenenfalls durch Zugabe eines organischen Lösungs- bzw. Verdünnungsmittels auf eine verarbeitungsfähige Viskosität eingestellt. Die Filme werden mit einem Filmzieher auf Prüfbleche aufgezogen, wobei die Naßfilmstärke 150 µm beträgt. Nach 5 Minuten ablüften bei Raumtemperatur werden die beschichteten Prüfbleche 30 Minuten bei 150°C gelagert. Danach werden sie auf Raumtemperatur abgekühlt. Man erhält auf diese Weise klare, farblose, vernetzte Filme mit guten filmoptischen und mechanischen Werten.

Die Lösungsmittelfestigkeit wird durch einen Wischtest mit einem Methylisobutylketon (MIBK)-getränkten Wattebausch geprüft. Angegeben wird die Anzahl der Doppelhübe, nach denen der Film ohne sichtbare Veränderung bleibt. Mehr als 200 Doppelhübe pro Film wurden nicht durchgeführt.

In der folgenden Tabelle II werden die Lösungsmittelfestigkeiten der Filme basierend auf den Copolymerisaten $A_1$ bis $A_7$ nach Härtung bei 150°C angegeben.

Tabelle II

| Verwendungsbeispiel | 1 | 2 | 3 | 4 | 5 | 6 | 7 |
|---|---|---|---|---|---|---|---|
| Lackfilm basierend auf Copolymerisat | $A_1$ | $A_2$ | $A_3$ | $A_4$ | $A_5$ | $A_6$ | $A_7$ |
| MIBK-Wischtest Anzahl der Doppelhübe | 200 | 140 | 150 | 180 | 200 | 200 | 200 |

b) Filmhärtung bei Raumtemperatur

Die Copolymerisate $A_1$ bis $A_7$ werden mit einem tertiären Amin bei Raumtemperatur vermischt und gegebenenfalls durch Zugabe eines organischen Lösungs- und Verdünnungsmittels auf eine verarbeitungsfähige Viskosität eingestellt. Die Filme werden mit einem Filmzieher auf Prüfbleche aufgezogen, wobei die Naßfilmstärke 150 μm beträgt. Die so bei Raumtemperatur aufgezogenen Filme waren alle spätestens nach 60 Minuten klebfrei durchgetrocknet. Nach Alterung, d.h. ca. 24 Stunden Trocknung bei Raumtemperatur, erhält man klare, farblose, vernetzte Filme mit guten filmoptischen und mechanischen Werten.

Die angesetzten Lackmischungen weisen durchweg eine Standzeit von mehreren Stunden auf.

Die Lösungsmittelfestigkeit wird wie zuvor beschrieben ermittelt.

In der folgenden Tabelle III werden die Zusammensetzungen der Bindemittelkombinationen und die Lösungsmittelfestigkeit als Grad der Vernetzung aufgeführt.

Tabelle III

| Verwendungsbeispiel | 1 | 2 | 3 | 4 | 5 | 6 | 7 |
|---|---|---|---|---|---|---|---|
| Komponente A | 40,0 g $A_1$ | 40,0 g $A_2$ | 40,0 g $A_3$ | 40,0 g $A_4$ | 40,0 g $A_5$ | 40,0 g $A_6$ | 40,0 g $A_7$ |
| N,N-Dimethylethanolamin | 0,1 g | 0,1 g | 0,1 g | 0,1 g | 0,1 g | 0,1 g | 0,1 g |
| Butylacetat | 15 g | 15 g | 15 g | 25 g | 20 g | 20 g | 25 g |
| Standzeit | >1 h | >2 h | >2 h | >2 h | >1 h | >1 h | >1 h |
| MIBK-Wischtest nach 24 h Raumtemperatur Anzahl der Doppelhübe | 180 | 130 | 150 | 170 | 200 | 200 | 200 |

## Patentansprüche

1. Copolymerisate mit einem als Gewichtsmittel bestimmten Molekulargewicht von 1500 bis 75 000 von olefinisch ungesättigten Verbindungen, dadurch gekennzeichnet, daß die Copolymerisate gleichzeitig
   (i) 0,2 bis 6,0 Gew.-% an freien Hydroxylgruppen,
   (ii) 1 bis 30 Gew.-% an Carbonsäureanhydridgruppen berechnet als $C_4H_2O_3$) und
   (iii) 0,4 bis 13 Gew.-% an Epoxidgruppen (berechnet als $C_2H_2O$)
   chemisch gebunden enthalten.

2. Verfahren zur Herstellung der Copolymerisate gemäß Anspruch 1 durch Copolymerisation eines Gemisches von olefinisch ungesättigten Verbindungen bei 60 bis 120°C in Gegenwart von, die Polymerisationsreaktion initiierenden Verbindungen, dadurch gekennzeichnet, daß man ein solches Gemisch an olefinisch ungesättigten Verbindungen verwendet, welches neben Hydroxyl-, Epoxid- und Säureanhydridgruppen-freien Monomeren
   (i) olefinisch ungesättigten Alkohole,
   (ii) olefinisch ungesättigte Säureanhydride
   und
   (iii) olefinisch ungesättigte Epoxide
   in einer solchen Menge enthält, daß in dem Monomerengemisch 0,2 bis 6,0 Gew.-% Hydroxylgruppen, 1 bis 30 Gew.-% Carbonsäureanhydridgruppen (berechnet als $C_4H_2O_3$) und 0,4 bis 13 Gew.-% Epoxidgruppen (berechnet als $C_2H_2O$) vorliegen.

3. Verfahren gemäß Anspruch 2, dadurch gekennzeichnet, daß das der Copolymerisation zuzuführende Monomerengemisch aus
   a) 1 bis 50 Gew.-Teilen copolymerisierbaren, hydroxylfunktionellen Monomeren,
   b) 1 bis 30 Gew.-Teilen copolymerisierbaren, anhydridfunktionellen Monomeren,
   c) 1 bis 40 Gew.-Teilen copolymerisierbaren, epoxidfunktionellen Monomeren und
   d) 1 bis 50 Gew.-Teilen Hydroxylgruppen-, Carbonsäureanhydridgruppen- und Epoxidgruppen-freien inerten Monomeren,
   besteht, wobei die Summe aus a) bis d) 100 Gew.-Teile beträgt.

4. Verfahren gemäß Anspruch 2 und 3, dadurch gekennzeichnet, daß man als hydroxylfunktionelle Monomere Hydroxyalkylester der Acryl- oder Methacrylsäure verwendet.

5. Verfahren gemäß Anspruch 2 bis 4, dadurch gekennzeichnet, daß man als carbonsäureanhydridfunktionelle Monomere Maleinsäureanhydrid oder Itaconsäureanhydrid verwendet.

6. Verfahren gemäß Anspruch 2 bis 5, dadurch gekennzeichnet, daß man als epoxidfunktionelle Monomere Glycidylacrylat oder Glycidylmethacrylat verwendet.

7. Verwendung der Copolymerisate gemäß Anspruch 1 als Bindemittel in selbstvernetzenden, hitzehärtbaren Beschichtungsmitteln oder Dichtmassen.

8. Verwendung der Copolymerisate gemäß Anspruch 1 als Bindemittelkomponente in bei Raumtemperatur härtbaren Zweikomponenten-Beschichtungsmitteln oder -Dichtmassen, welche als weitere Bindemittelkomponente tertiäre Aminogruppen aufweisende, organische Verbindungen enthalten, die gegebenenfalls neben den tertiären Aminogruppen gegenüber Carbonsäureanhydrid- oder Epoxidgruppen reaktionsfähige Hydroxyl- und/oder Aminogruppen aufweisen.

## Claims

1. Copolymers having a weight average molecular weight of from 1500 to 75,000 of olefinically unsaturated compounds, characterised in that the copolymers at the same time contain, chemically bound therein,
   (i) from 0.2 to 6.0% by weight of free hydroxyl groups,
   (ii) from 1 to 30% by weight of carboxylic acid anhydride groups calculated as $C_4H_2O_3$ and
   (iii) from 0.4 to 13% by weight of epoxide groups (calculated as $C_2H_2O$).

2. A process for the preparation of the copolymers according to Claim 1 by the copolymerisation of a mixture

of olefinically unsaturated compounds at 60 to 120°C in the presence of compounds which initiate the polymerisation reaction, characterised in that the mixture of olefinically unsaturated compounds used is one which in addition to containing monomers which are free from hydroxyl, epoxide and acid anhydride groups contain
(i) olefinically unsaturated alcohols,
(ii) olefinically unsaturated acid anhydrides
and
(iii) olefinically unsaturated epoxides in such a quantity that the monomer mixture contains from 0.2 to 6.0% by weight of hydroxyl groups, from 1 to 30% by weight of carboxylic acid anhydride groups (calculated as $C_4H_2O_3$) and from 0.4 to 13% by weight of epoxide groups (calculated as $C_2H_2O$).

3. A process according to Claim 2, characterised in that the monomer mixture to be copolymerised consists of
a) from 1 to 50 parts by weight of copolymerisable, hydroxyl functional monomers,
b) from 1 to 30 parts by weight of copolymerisable anhydride functional monomers,
c) from 1 to 40 parts by weight of copolymerisable, epoxide functional monomers and
d) from 1 to 50 parts by weight of inert monomers which are free from hydroxyl groups, carboxylic acid anhydride groups and epoxide groups,
the sum of a) to d) being 100 parts by weight.

4. A process according to Claims 2 and 3, characterised in that the hydroxyl functional monomers used are hydroxyalkylesters of acrylic or methacrylic acid.

5. A process according to Claims 2 to 4, characterised in that the carboxylic acid anhydride functional monomers used are maleic acid anhydride or itaconic acid anhydride.

6. A process according to Claims 2 to 5, characterised in that the epoxide functional monomers used are glycidyl acrylate or glycidyl methacrylate.

7. Use of the copolymers according to Claim 1 as binders in self-crosslinking, heat-curable coating compounds or sealing compounds.

8. Use of the copolymers according to Claim 1 as binder components in two-component coating or sealing compounds which are curable at room temperature and which contain, as additional binder components, organic compounds which contain tertiary amino groups and which in addition to the tertiary amino groups optionally contain hydroxyl and/or amino groups which are reactive with carboxylic acid anhydride or epoxide groups.

## Revendications

1. Copolymères, ayant un poids moléculaire de 1500 à 75 000 déterminé comme moyenne pondérale, de composés à non-saturation oléfinique, caractérisés en ce qu'ils contiennent, liés chimiquement
(i) 0,2 à 6,0 % en poids de groupes hydroxyle libres,
(ii) 1 à 30 % en poids de groupes anhydride d'acide carboxylique (exprimés en $C_4H_2O_3$) et
(iii) 0,4 à 13 % en poids de groupes époxyde (exprimés en $C_2H_2O$).

2. Procédé de production des copolymères suivant la revendication 1 par copolymérisation d'un mélange de composés à non-saturation oléfinique à une température de 60 à 120°C en présence de composés initiateurs de réaction de polymérisation, caractérisé en ce qu'on utilise un mélange de composés à non-saturation oléfinique qui contient, à côté de monomères dépourvus de groupes hydroxyle, époxyde et anhydride d'acide
(i) des alcools à non-saturation oléfinique,
(ii) des anhydrides d'acide à non-saturation oléfinique et
(iii) des époxydes à non-saturation oléfinique en une quantité telle qu'il y ait dans le mélange de monomères 0,2 à 6,0 % en poids de groupes hydroxyle, 1 à 30 % en poids de groupes anhydride d'acide carboxylique (exprimés en $C_4H_2O_3$) et 0,4 à 13 % en poids de groupes époxyde (exprimés en $C_2H_2O$).

3. Procédé suivant la revendication 2, caractérisé en ce que le mélange de monomères devant être exposé

à la copolymérisation est constitué

a) de 1 à 50 parties en poids de monomères copolymérisables à fonction hydroxyle
b) de 1 à 30 parties en poids de monomères copolymérisables à fonction anhydride
c) de 1 à 40 parties en poids de monomères copolymérisables à fonction époxyde et
d) de 1 à 50 parties en poids de monomères inertes dépourvus de groupes hydroxyle, de groupes anhydride d'acide carboxylique et de groupes époxyde,

la somme de a) à d) s'élevant à 100 parties en poids.

**4.** Procédé suivant les revendications 2 et 3, caractérisé en ce qu'on utilise comme monomères à fonction hydroxyle des esters hydroxyalkyliques de l'acide acrylique ou méthacrylique.

**5.** Procédé suivant les revendications 2 à 4, caractérisé en ce qu'on utilise comme monomères à fonction anhydride d'acide carboxylique, l'anhydride d'acide maléique ou l'anhydride d'acide itaconique.

**6.** Procédé suivant les revendications 2 à 5, caractérisé en ce qu'on utilise comme monomères à fonction époxyde l'acrylate de glycidyle ou le méthacrylate de glycidyle.

**7.** Utilisation des copolymères suivant la revendication 1 comme liant dans des compositions de revêtement ou des matières d'étanchéité auto-réticulantes durcissables à la chaleur.

**8.** Utilisation des copolymères suivant la revendication 1 comme composant de liant dans des compositions de revêtement ou des matières d'étanchéité à deux composants durcissant à la température ambiante, qui contiennent comme autres composant liant des composés organiques porteurs de groupes amino-tertiaire qui présentent le cas échéant, à côté des groupes amino-tertiaire, des groupes hydroxyle et/ou amino aptes à réagir vis-à-vis de groupes anhydride d'acide carboxylique ou époxyde.